# EUROPÄISCHE PATENTSCHRIFT

(11) **EP 2 523 836 B1**
(45) Veröffentlichungstag und Bekanntmachung des Hinweises auf die Patenterteilung: **18.09.2019**
(21) Anmeldenummer: 10775840.1
(22) Anmeldetag: 12.11.2010
(51) Int. Cl.: B60T 7/12, B60T 17/22, F16D 65/00

(54) **VORRICHTUNG UND VERFAHREN ZUM ENTFERNEN VON ROST AUF KFZ-RADBREMSEN**
DEVICE AND METHOD FOR REMOVING RUST ON MOTOR VEHICLE WHEEL BRAKES
DISPOSITIF ET PROCÉDÉ D'ÉLIMINATION DE LA ROUILLE SUR LES FREINS DE ROUES DE VÉHICULES

(30) Priorität: 12.01.2010 DE 102010000823
(43) Veröffentlichungstag der Anmeldung: 21.11.2012
(73) Patentinhaber: Robert Bosch GmbH, 70442 Stuttgart (DE)
(72) Erfinder: LJUNGDAHL, Peter, 71636 Ludwigsburg (DE)
(86) Internationale Anmeldenummer: PCT/EP2010/067387
(87) Internationale Veröffentlichungsnummer: WO 2011/085841

(56) Entgegenhaltungen:
- DE-A1- 10 338 564
- DE-A1- 19 916 700
- JP-A- 2006 123 619
- JP-A- 2008 132 906
- US-A1- 2005 124 462

## Beschreibung

### Stand der Technik

Die vorliegende Erfindung betrifft eine Vorrichtung zum Entfernen von Rost auf Kfz-Radbremsen.

DE 199 16 700 A1 offenbart ein Verfahren und eine Vorrichtung zum Betreiben der Betriebsbremse eines Kraftfahrzeuges.

Elektro- und Hybridfahrzeuge werden in den meisten Fällen rein generatorisch gebremst, um Energie aus dem Bremsvorgang zurückgewinnen zu können. Die Radbremsen einer hydraulischen Bremsanlage werden dagegen eher selten genutzt. Dadurch kann sich an den Bremsscheiben der Radbremsen Rost ansetzen, der die Bremsleistung mindert.

Zum Verbessern der Bremsleistung bei Nässe ist es bekannt, das so genannte Scheibenwischen ("Brake Disk Wiping") durchzuführen. Dabei werden die Bremsbacken mit geringem Druck an die Bremsscheiben angelegt, so dass ein auf der Bremsscheibe befindlicher Wasserfilm entfernt wird. Der Zustand "Nässe" wird üblicherweise mittels eines Regensensors erkannt. Beim Ausführen dieser Funktion wird grundsätzlich auch Rost von der Bremsscheibe entfernt. Die Scheibenwisch-Funktion ist aber für das Entfernen von Rost nur bedingt geeignet, da sich Rost auch dann an den Bremsscheiben bildet, wenn es längere Zeit nicht regnet.

Der Erfindung liegt daher die Aufgabe zugrunde, eine Vorrichtung zum Entfernen von Rost auf Bremsscheiben eines Fahrzeugs zu schaffen.

### Offenbarung der Erfindung

Die Aufgabe wird mit einer Rostentfernungsvorrichtung für Kfz-Radbremsen und einem Verfahren zum Entfernen von Rost auf Radbremsen eines Fahrzeugs gemäß den unabhängigen Ansprüchen gelöst. Vorteilhafte Weiterentwicklungen sind Gegenstand der abhängigen Ansprüche.

Eine Bremsvorrichtung mit Rostentfernungsfunktion wird vorgeschlagen, die eine Steuereinheit umfasst, welche eine Radbremse automatisch ansteuert, wenn zumindest ein Fahrzeugparameter eine jeweils vorgegebene Aktivierungsbedingung erfüllt. Als Fahrzeugparameter werden dabei - im Unterschied zu Umgebungsparametern, wie z. B. "Nässe" - sämtliche das Fahrzeug selbst betreffende Parameter verstanden. Erfindungsgemäße Fahrzeugparameter sind beispielsweise: die Fahrzeuggeschwindigkeit, das Motormoment eines Fahrzeugmotors, ein Zündzyklus-Zählerstand, eine Zeitinformation, wie z. B. eine Information über die Betriebsdauer des Fahrzeugs, oder ein Bremsdruck. Wenn wenigstens einer der Fahrzeugsparameter eine jeweils vorgegebene Aktivierungsbedingung erfüllt, wird die erfindungsgemäße Rostentfernungs-Funktion durchgeführt, indem die Bremsbacken mit leichtem Bremsdruck an die Bremsscheiben angelegt werden. Dadurch wird der auf der Bremsscheibe befindliche Rost einfach weg poliert. Diese Erfindung ist besonders vorteilhaft für Elektro- und Hybridfahrzeuge, da bei diesen Fahrzeugen die hydraulischen Radbremsen seltener zum Einsatz kommen.

Gemäß einer bevorzugten Ausführungsform der Erfindung wird das Motormoment eines Fahrzeugmotors, während die Rostentfernung durchgeführt wird, erhöht, um die bremsende Wirkung der Rostentfernung wenigstens teilweise zu kompensieren. Das Motormoment des Fahrzeugmotors kann z. B. von der Steuereinheit eingestellt werden. Wenn die bremsende Wirkung der Radbremsen vollständig kompensiert wird, ist der Rostentfernungsvorgang für den Fahrer nicht mehr spürbar.

Einer der Fahrzeugparameter ist ein Zündzyklus-Zählerstand, der z. B. mittels eines Zählers bestimmt werden kann. In diesem Fall ist die zugehörige Aktivierungsbedingung z. B. erfüllt, wenn der aktuell ermittelte Zählerstand größer ist als derjenige bei einer zuletzt durchgeführten Rostentfernung. Um unnötige Belastungen der Bremsen zu vermeiden und Energie zu sparen, sollte der Rostentfernungsvorgang vorzugsweise maximal einmal pro Zündzyklus aufgerufen werden. Die Rostentfernungs-Funktion kann so eingestellt werden, dass sie nur jeden zweiten, dritten oder n-ten Zündzyklus ausgeführt wird.

Einer der Fahrzeugparameter kann auch eine Fahrzeuggeschwindigkeit sein, die z. B. mittels Rad-Drehzahlsensoren gemessen werden kann. In diesem Fall ist die zugehörige Aktivierungsbedingung z. B. erfüllt, wenn die gemessene Fahrzeuggeschwindigkeit größer ist als ein bestimmter Schwellenwert. Der Schwellenwert kann z. B. 50 km/h betragen oder auch kleiner sein, bei schweren Fahrzeugen beispielsweise 30 km/h. Dies hat den Vorteil, dass ab einer bestimmten Fahrgeschwindigkeit die Rostentfernung auf Grund von Wind- und Reifengeräuschen für den Fahrer nicht mehr hörbar ist.

Einer der Fahrzeugparameter kann auch ein Motormoment eines Fahrzeugmotors sein, das z. B. von einem Motor-Steuergerät bereitgestellt wird. In diesem Fall ist die zugehörige Aktivierungsbedingung z. B. erfüllt, wenn das aktuell ermittelte Motormoment kleiner ist als ein vorgegebener Schwellenwert, wie z. B. 80 % eines maximalen Motormoments. Durch diese Aktivierungsbedingung soll sichergestellt werden, dass genügend Leistungsreserven zur Verfügung stehen, um das Bremsmoment durch Erhöhung des Motormoments kompensieren zu können.

Einer der Fahrzeugparameter kann auch ein Bremsdruck sein, der z. B. mittels eines Drucksensors gemessen werden kann. In diesem Fall ist die zugehörige Aktivierungsbedingung z. B. erfüllt, wenn der gemessene Bremsdruck gleich groß oder kleiner ist als ein vorbestimmter Schwellenwert, wie z. B. 0 bar. Diese Aktivierungsbedingung stellt sicher, dass die Rostentfernungs-Funktion nicht während einer Bremspedal-Betätigung durchgeführt wird. Eine Betätigung der Betriebsbremse könnte wahlweise auch mittels eines Bremspedalsensors, wie z. B. eines Wegsensors, erkannt werden.

Ein weiterer Fahrzeugparameter kann auch eine Zeitinformation sein, die z. B. mittels eines Zeitgebers gemessen werden kann. Die Zeitinformation kann sich z. B. auf die Betriebsdauer oder die Stillstandszeit des Fahrzeugs beziehen. In diesem Fall ist die zugehörige Aktivierungsbedingung z. B. erfüllt, wenn die gemessene Zeitdauer größer ist als ein vorgegebener Schwellenwert. Die Rostentfernungs-Funktion kann somit beispielsweise alle 10 oder 20 Betriebsstunden durchgeführt werden.

Der von der Rostentfernungsfunktion ausgeübte Bremsdruck beträgt vorzugsweise mehr als 5 bar und insbesondere mehr als 10 bar. Der Bremsdruck beim Rost entfernen ist vorzugsweise größer als derjenige beim Bremsscheibenwischen.

Die Dauer der Rostentfernung ist vorzugsweise individuell einstellbar.

Die Erfindung wird nun mit Bezug auf die begleitende Zeichnung anhand eines Beispiels erläutert. Es zeigt:

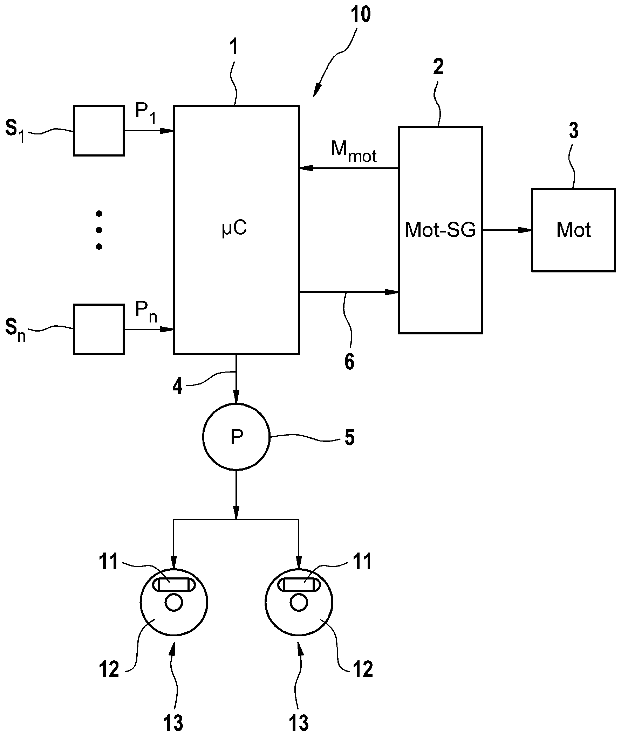

Fig. 1 ein Bremssystem mit einer Rostentfernungsvorrichtung gemäß einem Ausführungsbeispiel der Erfindung.

Figur 1 zeigt eine schematische Darstellung eines hydraulischen Bremssystems mit zwei Radbremsen 13 und einer Rostentfernungsvorrichtung 10 zum Entfernen von Rost auf den Radbremsen 13. Die Radbremsen 13 umfassen jeweils eine Bremsscheibe 12 und Bremsbacken 11 und sind wahlweise über ein Fuß-Bremspedal (nicht gezeigt) und/oder einem Bremsaktuator 5, wie z. B. eine Hydraulikpumpe, betätigbar.

Bei Elektro- und Hybridfahrzeugen werden die Radbremsen 13 eher selten eingesetzt, da solche Fahrzeuge in den meisten Fällen rein generatorisch gebremst werden. An den Bremsscheiben 12 kann sich daher Rost ansetzen, der die Bremsleistung mindert. Um die Bremsleistung zu verbessern, umfasst die dargestellte Bremsvorrichtung eine Rostentfernungsvorrichtung 10 mit einem in einem Steuergerät 1 hinterlegten Algorithmus und einem oder mehreren Sensoren S₁-Sₙ, die mit dem Steuergerät 1 verbunden sind. Die Sensoren messen verschiedene Fahrzeugparameter, wie z. B. die Fahrzeug-Geschwindigkeit oder einen Brems-Betätigungszustand, wie später noch genauer erläutert werden wird.

Das Steuergerät 1 liest die einzelnen Sensorsignale P₁-P_{N} ein und führt eine Rostentfernungsfunktion durch, wenn das bzw. die Sensorsignale P₁-P_{N} eine vorgegebene Aktivierungsbedingung erfüllen. Ist die Aktivierungsbedingung erfüllt, wird der Bremsaktuator 5 über eine Steuerleitung 4 vom Steuergerät 1 angesteuert und baut an den Radbremsen 13 automatisch einen vorgegebenen Bremsdruck auf, so dass sich die Bremsbacken 11 an die Bremsscheiben 12 anlegen und den Rost einfach weg schleifen. Der Bremsdruck wird dabei für eine vorgegebene Zeitdauer aufrechterhalten. Wahlweise können auch weniger oder mehr Sensoren S₁-Sₙ vorgesehen sein und entsprechend weniger oder mehr Fahrzeugparameter überwacht werden.

Die vom Steuergerät 1 eingelesenen Sensorsignale P₁-P_{N} sind beispielsweise ein Zündzyklus-Zählerstand, ein Bremsdruck, wie z. B. der Fahrer-Vordruck, ein Motormoment, ein Gaspedalweg, eine Rad-Drehzahl bzw. Fahrzeug-Geschwindigkeit, oder ein Bremsbetätigungszustand aus dem sich ergibt, ob das Bremspedal betätigt wird oder nicht. Die entsprechenden Sensoren S₁-Sₙ sind in diesem Fall ein Zündzykluszähler, ein Bremsdrucksensor, ein Gaspedal-Wegsensor, Rad-Drehzahlsensoren und ein Bremspedalsensor, wie z. B. ein Pedalwegsensor. Das Motormoment kann beispielsweise von einem Motor-Steuergerät 2 eingelesen werden.

Im vorliegenden Beispiel wird eine Rostentfernungsfunktion ausgeführt, wenn der Zündzyklus-Zählstand größer ist als derjenige bei der zuletzt durchgeführten Rostentfernung, die Fahrzeuggeschwindigkeit einen vorgegebenen Schwellenwert von z. B. 30 km/h oder auch 50 km/h überschreitet, das Motormoment des Fahrzeugantriebs kleiner ist als ein vorgegebener Schwellenwert, wie z. B. 80% des maximalen Motormoments, und das Fahrzeug gerade nicht gebremst wird.

Im vorliegenden Ausführungsbeispiel wird die Rostentfernungs-Funktion aktiviert, wenn alle genannten Aktivierungsbedingungen erfüllt sind. Je nach Anforderung können aber auch mehr oder weniger Aktivierungsbedingungen definiert werden.

Das automatische Betätigen der Bremsbacken 11 zur Rostentfernung hat zur Folge, dass das Fahrzeug leicht verzögert. Um diese Verzögerung zu kompensieren ist hier vorgesehen, das Motormoment eines Fahrzeugmotors 3 entsprechend zu erhöhen. Das Steuergerät 1 erzeugt zu diesem Zweck ein entsprechendes Steuersignal, das über eine Steuerleitung 6 an das Motor-Steuergerät 2 gesendet wird. Letzteres erhöht dann das Motormoment des Fahrzeugmotors, wie z. B. eines Elektromotors. Dadurch ist für den Fahrer keine Verzögerung des Fahrzeugs mehr spürbar.

Mit der erfindungsgemäßen Rostentfernungsvorrichtung wird der Rost von den Bremsschreiben 12 in regelmäßigen Abständen entfernt. Dadurch kann eine konstant gute Bremsleistung der Radbremsen 13 sichergestellt werden.

## Patentansprüche

1. Vorrichtung (10) zum Entfernen von Rost auf einer Bremsscheibe (12) einer Radbremse (13), umfassend eine Steuereinheit (1), die einen Bremsaktuator (5) automatisch ansteuert, um Bremsbacken (11) an die Bremsscheibe (12) wenigstens einer Radbremse (13) anzulegen, wenn zumindest ein Fahrzeugparameter (P₁-Pₙ; Mₘₒₜ) eine jeweils vorgegebene Aktivierungsbedingung erfüllt, **dadurch gekennzeichnet, dass** der zumindest eine Fahrzeugparameter (P₁-Pₙ; Mₘₒₜ) einen Zündzyklus-Zählerstand umfasst, und die zugehörige Aktivierungsbedingung erfüllt ist, wenn der ermittelte Zündzyklus-Zählerstand größer ist als vorgegebener Wert.

2. Vorrichtung (10) gemäß Anspruch 1, wobei die Steuereinheit (1), wenn die Aktivierungsbedingung erfüllt ist, auch einen Fahrzeugmotor (3) ansteuert, um die bremsende Wirkung der wenigstens einen Radbremse (13) bei der Rostentfernung wenigstens teilweise zu kompensieren.

3. Vorrichtung (10) gemäß einem der vorhergehenden Ansprüche, wobei ein zusätzlicher Fahrzeugparameter (P₁-Pₙ; Mₘₒₜ) eine Fahrzeuggeschwindigkeit umfasst, und die zusätzliche zugehörige Aktivierungsbedingung erfüllt ist, wenn die aktuelle Fahrzeuggeschwindigkeit höher ist als ein vorbestimmter Schwellenwert.

4. Vorrichtung (10) gemäß einem der vorhergehenden Ansprüche, wobei ein zusätzlicher Fahrzeugparameter (P₁-Pₙ; Mₘₒₜ) ein Motormoment eines Fahrzeugmotors (3) umfasst, und die zusätzliche zugehörige Aktivierungsbedingung erfüllt ist, wenn das ermittelte Motormoment kleiner ist als ein vorgegebener Schwellenwert.

5. Vorrichtung (10) gemäß einem der vorhergehenden Ansprüche, wobei ein zusätzlicher Fahrzeugparameter (P₁-Pₙ; Mₘₒₜ) einen Bremsdruck umfasst, und die zusätzliche zugehörige Aktivierungsbedingung erfüllt ist, wenn der gemessene Bremsdruck gleich groß oder kleiner ist als ein vorbestimmter Schwellenwert.

6. Verfahren zum Entfernen von Rost auf Bremsscheiben (12) eines Fahrzeugs, bei dem Fahrzeugbremsen (13) automatisch betätigt werden, wenn zumindest ein ermittelter Fahrzeugparameter (P₁-Pₙ; Mₘₒₜ) eine jeweils vorgegebene Aktivierungsbedingung erfüllt, um Rost auf Bremsscheiben (12) der Fahrzeugbremsen (13) zu entfernen, **dadurch gekennzeichnet, dass** der zumindest eine Fahrzeugparameter (P₁-Pₙ; Mₘₒₜ) ein Zündzyklus-Zählerstand ist, und die zugehörige Aktivierungsbedingung erfüllt ist, wenn der ermittelte Zündzyklus-Zählerstand größer ist als ein vorgegebener Wert.

7. Verfahren gemäß Anspruch 6, wobei das Motormoment eines Fahrzeugmotors (3) mittels der Steuereinheit (1) erhöht wird, um die bremsende Wirkung der wenigstens einen Radbremse (13) bei der Rostentfernung wenigstens teilweise zu kompensieren.

8. Verfahren gemäß einem der Ansprüche 6 bis 7, wobei ein zusätzlicher Fahrzeugparameter (P₁-Pₙ; Mₘₒₜ) eine Fahrzeuggeschwindigkeit ist, und die zusätzliche zugehörige Aktivierungsbedingung erfüllt ist, wenn die gemessene Fahrzeuggeschwindigkeit höher ist als ein vorbestimmter Schwellenwert.

9. Verfahren gemäß einem der Ansprüche 6 bis 8, wobei ein zusätzlicher Fahrzeugparameter (P₁-Pₙ; Mₘₒₜ) ein Motormoment (Mₘₒₜ) eines Fahrzeugmotors (3) zum Antreiben des Fahrzeugs ist, und die zusätzliche zugehörige Aktivierungsbedingung erfüllt ist, wenn das ermittelte Motormoment (Mₘₒₜ) kleiner ist als ein vorbestimmter Schwellenwert.

10. Verfahren gemäß einem der Ansprüche 6 bis 9, wobei ein zusätzlicher Fahrzeugparameter (P₁-Pₙ; Mₘₒₜ) ein gemessener Bremsdruck ist und die zusätzliche zugehörige Aktivierungsbedingung erfüllt ist, wenn der gemessene Bremsdruck gleich groß oder kleiner ist als ein vorbestimmter Schwellenwert.

11. Steuergerät (1), ausgelegt zur Durchführung eines der vorstehend beanspruchten Verfahren.

## Claims

1. Device (10) for removing rust on a brake disk (12) of a wheel brake (13), comprising a control unit (1) which automatically actuates a brake actuator (5), in order to apply a brake shoe (11) to the brake disk (12) of at least one wheel brake (13) if at least one vehicle parameter (P₁-Pₙ; Mₘₒₜ) satisfies a respectively predefined activation condition, **characterized in that** the at least one vehicle parameter (P₁-Pₙ; Mₘₒₜ) comprises an ignition cycle counter reading, and the associated activation condition is satisfied if the ascertained ignition cycle counter reading is greater than a predefined value.

2. Device (10) according to Claim 1, wherein if the activation condition is satisfied, the control unit (1) also actuates a vehicle engine (3) in order to at least partially compensate the braking effect of the at least one wheel brake (13) during the removal of rust.

3. Device (10) according to one of the preceding claims, wherein an additional vehicle parameter (P₁-Pₙ; Mₘₒₜ) comprises a vehicle speed, and the additional associated activation condition is satisfied if the current vehicle speed is higher than a predetermined threshold value.

4. Device (10) according to one of the preceding claims, wherein an additional vehicle parameter (P₁-Pₙ; Mₘₒₜ) comprises an engine torque of a vehicle engine (3), and the additional associated activation condition is satisfied if the ascertained engine torque is lower than a predefined threshold value.

5. Device (10) according to one of the preceding claims, wherein an additional vehicle parameter (P₁-Pₙ; Mₘₒₜ) comprises a brake pressure, and the additional associated activation condition is satisfied if the measured brake pressure is equal to or lower than a predetermined threshold value.

6. Method for removing rust on brake disks (12) of a vehicle, in which vehicle brakes (13) are automatically activated if at least one ascertained vehicle parameter (P₁-Pₙ; Mₘₒₜ) satisfies a respectively predefined activation condition, in order to remove rust on brake disks (12) of the vehicle brakes (13), **characterized in that**
the at least one vehicle parameter (P₁-Pₙ; Mₘₒₜ) is an ignition cycle counter reading, and the associated activation condition is satisfied if the ascertained ignition cycle counter reading is higher than a predefined value.

7. Method according to Claim 6, wherein the engine torque of a vehicle engine (3) is increased by means of the control unit (1), in order to at least partially compensate the braking effect of the at least one wheel brake (13) during the removal.

8. Method according to one of Claims 6 to 7, wherein an additional vehicle parameter (P₁-Pₙ; Mₘₒₜ) is a vehicle speed, and the additional associated activation condition is satisfied if the measured vehicle speed is higher than a predetermined threshold value.

9. Method according to one of Claims 6 to 8, wherein an additional vehicle parameter (P₁-Pₙ; Mₘₒₜ) is an engine torque (Mₘₒₜ) of a vehicle engine (3) for driving the vehicle, and the additional associated activation condition is satisfied if the ascertained engine torque (Mₘₒₜ) is lower than a predetermined threshold value.

10. Method according to one of Claim 6 to 9, wherein an additional vehicle parameter (P₁-Pₙ; Mₘₒₜ) is a measured brake pressure, and the additional associated activation condition is satisfied if the measured brake pressure is equal to or lower than a predetermined threshold value.

11. Control device (1), configured to carry out one of the methods claimed above.

## Revendications

1. Dispositif (10) d'élimination de la rouille sur un disque de frein (12) d'un frein de roue (13), comprenant une unité de commande (1) qui commande automatiquement un actionneur de frein (5) afin de poser des mâchoires de frein (11) au niveau du disque de frein (12) d'au moins un frein de roue (13) lorsqu'au moins un paramètre du véhicule (P₁ - Pₙ ; Mₘₒₜ) remplit une condition d'activation respectivement prédéfinie, **caractérisé en ce que** l'au moins un paramètre du véhicule (P₁ - Pₙ ; Mₘₒₜ) comprend un état de compteur de cycle d'allumage, et la condition d'activation associée est remplie si l'état de compteur de cycle d'allumage déterminé est supérieur à une valeur prédéfinie.

2. Dispositif (10) selon la revendication 1, dans lequel l'unité de commande (1), lorsque la condition d'activation est remplie, commande aussi un moteur de véhicule (3) pour compenser au moins partiellement l'effet de freinage de l'au moins un frein de roue (13) lors de l'élimination de la rouille.

3. Dispositif (10) selon une des revendications précédentes, dans lequel un paramètre supplémentaire du véhicule (P₁ - Pₙ ; Mₘₒₜ) comprend une vitesse de véhicule, et la condition d'activation associée supplémentaire est remplie si la vitesse actuelle du véhicule est supérieure à une valeur seuil prédéfinie.

4. Dispositif (10) selon une des revendications précédentes, dans lequel un paramètre du véhicule supplémentaire (P₁ - Pₙ ; Mₘₒₜ) comprend un couple de moteur d'un moteur de véhicule (3), et la condition d'activation associée supplémentaire est remplie si le couple de moteur déterminé est inférieur à une valeur seuil prédéfinie.

5. Dispositif (10) selon une des revendications précédentes, dans lequel un paramètre du véhicule supplémentaire (P₁ - Pₙ ; Mₘₒₜ) comprend une pression de frein, et la condition d'activation associée supplémentaire est remplie si la pression de frein mesurée est inférieure ou égale à une valeur seuil prédéfinie.

6. Procédé d'élimination de la rouille sur des disques de freins (12) d'un véhicule, dans lequel des freins du véhicule (13) sont actionnés automatiquement si au moins un paramètre déterminé (P₁ - Pₙ ; Mₘₒₜ) du véhicule remplit une condition d'activation respectivement prédéfinie pour éliminer la rouille sur les disques de freins (12) des freins du véhicule (13), **caractérisé en ce que** l'au moins un paramètre du véhicule (P₁ - Pₙ ; Mₘₒₜ) est un état de compteur de cycle d'allumage, et la condition d'activation associée est remplie si l'état de compteur de cycle d'allumage déterminé est supérieur à une valeur prédéfinie.

7. Procédé selon la revendication 6, dans lequel le couple de moteur d'un moteur de véhicule (3) est augmenté au moyen de l'unité de commande (1) pour compenser au moins partiellement l'effet de freinage de l'au moins un frein de roue (13) lors de l'élimination de la rouille.

8. Procédé selon une des revendications 6 et 7, dans lequel un paramètre supplémentaire du véhicule (P₁ - Pₙ ; Mₘₒₜ) est une vitesse de véhicule, et la condition d'activation supplémentaire corrélative est remplie si la vitesse mesurée du véhicule est supérieure à une valeur seuil prédéfinie.

9. Procédé selon une des revendications 6 à 8, dans lequel un paramètre supplémentaire du véhicule (P₁ - Pₙ ; Mₘₒₜ) est un couple de moteur (Mₘₒₜ) d'un moteur de véhicule (3) servant à la propulsion du véhicule, et la condition d'activation associée supplémentaire est remplie si le couple de moteur (Mₘₒₜ) déterminé est inférieur à une valeur seuil prédéfinie.

10. Procédé selon une des revendications 6 à 9, dans lequel un paramètre supplémentaire du véhicule (P₁ - Pₙ ; Mₘₒₜ) est une pression de frein mesurée, et la condition d'activation associée supplémentaire est remplie si la pression de frein mesurée est inférieure ou égale à une valeur seuil prédéfinie.

11. Appareil de commande (1), conçu pour réaliser un procédé selon une des revendications précédentes.
